# FASCICULE DE BREVET EUROPEEN

(11) **EP 0 725 810 B1**
(45) Date de publication et mention de la délivrance du brevet: **08.09.1999**
(21) Numéro de dépôt: 95914400.7
(22) Date de dépôt: 22.03.1995
(51) Int. Cl.: C10G 45/62, B01J 23/40, B01J 35/10

(54) **PROCEDE DE TRAITEMENT AVEC HYDROISOMERISATION DE CHARGES ISSUES DU PROCEDE FISCHER-TROPSCH**
VERFAHREN ZUR BEHANDLUNG DUCH HYDROISOMERIZIERUNG VON EINSÄTZE AUS FISHER-TROPSHVERFAHREN
METHOD FOR THE HYDROISOMERISATION PROCESSING OF FEEDSTOCKS FROM THE FISCHER-TROPSCH PROCESS

(30) Priorité: 01.04.1994 FR 9403869
(43) Date de publication de la demande: 14.08.1996
(73) Titulaire: INSTITUT FRANCAIS DU PETROLE, 92506 Rueil-Malmaison Cédex (FR)
(72) Inventeur: MIGNARD, Samuel, F-78400 Chatou (FR); MARCHAL, Nathalie, F-75005 Paris (FR); KASZTELAN, Slavik, F-92500 Rueil-Malmaison (FR); BIGEARD, Pierre-Henri, F-38200 Vienne (FR); BILLON, Alain, F-78110 Le Vésinet (FR)
(74) Mandataire: Andreeff, François
(86) Numéro de dépôt international: FR9500353
(87) Numéro de publication internationale: WO9527020

(56) Documents cités:
- EP-A- 0 321 307
- EP-A- 0 323 092
- EP-A- 0 532 116
- EP-A- 0 533 451
- FR-A- 2 563 120
- US-A- 3 843 509

## Description

La présente invention concerne un procédé de traitement avec hydroisomérisation de charges issues du procédé Fischer-Tropsch permettant d'obtenir des produits des huiles de base.

Dans le procédé Fischer-Tropsch, le gaz de synthèse (CO+H₂) est transformé catalytiquement en produits oxygénés et en hydrocarbures essentiellement linéaires sous forme gazeuse, liquide ou solide. Ces produits sont généralement exempts d'impuretés hétéroatomiques telles que, par exemple, le soufre, l'azote ou des métaux. Ils ne contiennent également pratiquement pas d'aromatiques, de naphtènes et plus généralement de cycles. Par contre, ils peuvent présenter une teneur non négligeable en produits oxygénés qui, exprimée en poids d'oxygène, est inférieure à 5% poids environ et également une teneur en insaturés (produits oléfiniques en général) inférieure à 10% en poids. Cependant, ces produits ne peuvent être utilisés tels quels notamment à cause de leurs propriétés de tenue à froid peu compatibles avec les utilisations habituelles des coupes pétrolières. Par exemple, le point d'écoulement d'un hydrocarbure linéaire contenant 30 atomes de carbone par molécule (température d'ébullition égale à 450°C environ c'est-à-dire comprise dans la coupe huile) est de +67°C environ alors que les spécifications douanières exigent un point d'écoulement inférieur à -9°C pour les huiles commerciales. Ces hydrocarbures issus du procédé Fischer-Tropsch doivent alors être transformés en produits plus valorisables telles que les huiles de base après avoir subi des réactions catalytiques d'hydroisomérisation.

Tous les catalyseurs utilisés actuellement en hydroisomérisation sont du type bifonctionnels associant une fonction acide à une fonction hydrogénante. La fonction acide est apportée par des supports de grandes surfaces (150 à 800 m².g⁻¹ généralement) présentant une acidité superficielle, telles que les alumines halogénées (chlorées ou fluorées notamment), les alumines phosphorées, les combinaisons d'oxydes de bore et d'aluminium, les silices-alumines amorphes et les silice-alumines. La fonction hydrogénante est apportée soit par un ou plusieurs métaux du groupe VIII de la classification périodique des éléments, tels que fer, cobalt, nickel, ruthénium, rhodium, palladium, osmium, iridium et platine, soit par une association d'au moins un métal du groupe VI tels que chrome, molybdène et tungstène et au moins un métal du groupe VIII.

On connaît la demande de brevet européen EP-A-0533451 qui décrit un procédé utilisant un catalyseur contenant notamment un métal du groupe VIII (noble ou non noble), un support contenant de l'alumine ou de la silice-alumine, la teneur en Si étant alors inférieure à 35 % en poids par rapport au poids total du support, au moins environ 0,5 % du poids de Si comme agent modificateur de surface et qui présente une surface B.E.T. d'environ 180 à 400 m²/g. Par ailleurs, ce catalyseur peut contenir un métal du groupe VI.

L'équilibre entre les deux fonctions acide et hydrogénante est le paramètre fondamental qui régit l'activité et la sélectivité du catalyseur. Une fonction acide faible et une fonction hydrogénante forte donnent des catalyseurs peu actifs et sélectifs envers l'isomérisation alors qu'une fonction acide forte et une fonction hydrogénante faible donnent des catalyseurs très actifs et sélectifs envers le craquage. Une troisième possibilité est d'utiliser une fonction acide forte et une fonction hydrogénante forte afin d'obtenir un catalyseur très actif mais également très sélectif envers l'isomérisation. Il est donc possible, en choisissant judicieusement chacune des fonctions d'ajuster le couple activité/sélectivité du catalyseur.

Les travaux de recherche effectués par la demanderesse sur de nombreuses silice-alumines l'ont conduit à découvrir que, de façon surprenante, l'utilisation d'un catalyseur sans halogène ni zéolite, comprenant une silice-alumine particulière permet d'obtenir des catalyseurs très sélectifs envers l'isomérisation de charges telles que définies ci-après. Une demande européenne 959114399.1 (EP-A-0 701 480) WO-A-9 526 819 a également été déposée le même jour que la présente demande pour couvrir le catalyseur utilisé dans le procédé de la présente demande ; cette demande n'est pas opposable à la présente demande.

Plus précisément, selon l'invention, le catalyseur est essentiellement constitué de 0,05-10% en poids d'au moins un métal noble du groupe VIII déposé sur un support amorphe de silice-alumine ledit catalyseur montrant une teneur constante en silice dans tout le catalyseur, ledit support contient 5-70% en poids de silice et présente une surface spécifique BET de 100-500m²/g et le catalyseur présente
- un diamètre moyen des pores compris entre 1-12nm,
- un volume poreux des pores dont le diamètre est compris entre le diamètre moyen tel que défini précédemment diminué de 3nm et le diamètre moyen tel que défini précédemment augmenté de 3nm est supérieur à 40% du volume poreux total
- une dispersion du métal noble comprise entre 20-100%,
- un coefficient de répartition du métal noble supérieur à 0,1.

Ces caractéristiques sont plus en détail :

*Teneur en silice* : le support utilisé pour l'élaboration du catalyseur décrit dans le cadre de ce brevet est composé de silice SiO₂ et d'alumine Al₂O₃. La teneur en silice, exprimée en pourcentage poids, est compris entre 5 et 70 et de manière préférée entre 20 et 60% et de manière encore plus préférée entre 22 et 45. Cette teneur est parfaitement mesurée à l'aide de la fluorescence X. Elle est constante dans tout le catalyseur, c'est-à-dire que la concentration en silice n'est pas plus forte à la surface du catalyseur par exemple, le catalyseur est homogène en silice.

*Nature du métal noble :* pour ce type particulier de réaction, la fonction métallique est apportée par un métal noble du groupe VIII de la classification périodique des éléments et plus particulièrement le platine.

*Teneur en métal noble :* la teneur en métal noble, exprimée en % poids de métal par rapport au catalyseur, est comprise entre 0,05 à 10 et plus préférentiellement comprise entre 0,1 et 5.

*Dispersion du métal noble :* la dispersion, représentant la fraction de métal accessible au réactif par rapport à la quantité totale de métal du catalyseur, peut être mesurée, par exemple, par titrage H₂/O₂. Le métal est préalablement réduit c'est-à-dire qu'il subit un traitement sous flux d'hydrogène à haute température dans des conditions telles que tous les atomes de platine accessibles à l'hydrogène soient transformés sous forme métallique. Ensuite, un flux d'oxygène est envoyé dans des conditions opératoires adéquates pour que tous les atomes de platine réduit accessibles à l'oxygène soit oxydés sous forme PtO_{2.} En calculant la différence entre la quantité d'oxygène introduit et la quantité d'oxygène sortante, on accède à la quantité d'oxygène consommée ; ainsi, on peut alors déduire de cette dernière valeur la quantité de platine accessible à l'oxygène. La dispersion est alors égale au rapport quantité de platine accessible à l'oxygène sur quantité totale de platine du catalyseur. Dans notre cas, la dispersion est comprise entre 20% et 100% et de préférence entre 30% et 100%.

*Répartition du métal noble :* la répartition du métal noble représente la distribution du métal à l'intérieur du grain de catalyseur, le métal pouvant être bien ou mal dispersé. Ainsi, il est possible d'obtenir le platine mal réparti (par exemple détecté dans une couronne dont l'épaisseur est nettement inférieure au rayon du grain) mais bien dispersé c'est-à-dire que tous les atomes de platine, situés en couronne, seront accessibles aux réactifs. Dans notre cas, la répartition du platine est bonne c'est-à-dire que le profil du platine, mesuré d'après la méthode de la microsonde de Castaing, présente un coefficient de répartition supérieur à 0,1 et de préférence supérieur à 0,2.

*Surface BET :* la surface BET du support est comprise entre 100m²/g et 500m²/g et de préférence comprise entre 250m²/g et 450m²/g et de manière encore plus préférée entre 310m²/g et 450m²/g.

*Diamètre moyen des pores :* le diamètre moyen des pores du catalyseur est mesuré à partir du profil de répartition poreuse obtenu à l'aide d'un porosimètre au mercure. Le diamètre moyen des pores est défini comme étant le diamètre correspondant à l'annulation de la courbe dérivée obtenue à partir de la courbe de porosité au mercure. Le diamètre moyen des pores, ainsi défini, est compris entre 1nm (1.10⁻⁹ mètre) et 12nm (12.10⁻⁹ mètre) et de préférence compris entre 2,5nm (2,5.10⁻⁹ mètre) et 11nm (11.10⁻⁹ mètre) et de manière encore plus préférée entre 4nm (4.10⁻⁹ mètre) et 10,5nm (10,5.10⁻⁹ mètre) et de façon avantageuse entre 3 et 9nm.

*Répartition poreuse :* le catalyseur dont il est question dans ce brevet a une répartition poreuse telle que le volume poreux des pores dont le diamètre est compris entre le diamètre moyen tel que défini précédemment diminué de 3nm et le diamètre moyen tel que défini précédemment augmenté de 3nm (soit le diamètre moyen ± 3nm) est supérieur à 40% du volume poreux total et de manière préférée compris entre 50% et 90% du volume poreux total et plus avantageusement encore entre 50% et 80% du volume poreux total et mieux entre 50% et 70% du volume poreux total. Le catalyseur présente une répartition poreuse uniforme, du type monomodal plutôt que bimodal.

*Volume poreux global du support :* il est généralement inférieur à 1,0ml/g et de préférence compris entre 0,3 et 0,9ml/g et encore plus avantageusement inférieur à 0,85ml/g. D'une façon générale, le support présente un volume poreux global de plus de 0,55 ml/g et mieux d'au moins 0,6 ml/g.

La préparation et la mise en forme de la silice-alumine est faite par des méthodes usuelles bien connues de l'homme de l'art. De façon avantageuse, préalablement à l'imprégnation du métal, le support pourra subir une calcination comme par exemple un traitement thermique à 300-750°C (600°C préféré) pendant 0,25-10 heures (2 heures préféré) sous 2-30% volume de vapeur d'eau (7,5% préféré).

Le sel de métal est introduit par une des méthodes usuelles utilisées pour déposer le métal (par exemple le platine) à la surface d'un support. Une des méthodes préférées est l'imprégnation à sec qui consiste en l'introduction du sel de métal dans un volume de solution qui est égal au volume poreux de la masse de catalyseur à imprégner. Une solution acide, neutre ou basique du sel de métal (platine notamment) peut convenir. Des solutions dites neutres (pH proche de celui de l'eau) ou basiques sont préférées. Avant l'opération de réduction, le catalyseur pourra subir une calcination comme par exemple un traitement sous air sec à 300-750°C (520°C préféré) pendant 0,25-10 heures (2 heures préféré).

Avant utilisation dans la réaction d'hydroisomérisation, le métal contenu dans le catalyseur doit être réduit. Une des méthodes préférées pour conduire la réduction du métal est le traitement sous hydrogène à une température comprise entre 150°C et 650°C et une pression totale comprise entre 0,1 et 25MPa. Par exemple, une réduction consiste en un palier à 150°C de 2 heures puis une montée en température jusqu'à 450°C à la vitesse de 1°C/min puis un palier de 2 heures à 450°C ; durant toute cette étape de réduction, le débit d'hydrogène est de 1000lhydrogène/lcatalyseur. Notons également que toute méthode de réduction ex-situ est convenable.

Le catalyseur tel qu'il est décrit est actif pour l'hydroisomérisation des charges issues du procédé Fischer-Tropsch afin d'obtenir une quantité importante de produits résultants de l'hydroisomérisation des molécules paraffiniques présentes dans la charge de départ. En particulier, il est intéressant d'obtenir des produits pouvant ensuite être utilisés comme composants de produits de lubrification.

La charge est mise en contact du catalyseur d'hydroisomérisation dans une zone (ou un reacteur) d'hydroisomérisation sous une pression partielle d'hydrogène de 2 à 25MPa, et avantageusement 2 à 20 MPa, et de préférence de 2 à 18MPa, à une température de 200-450°C, avantageusement 250-450°C, et de préférence 300-450°C et encore plus avantageusement 320-450°C, ou encore 200-400°C, 300-400°C ou 320-400°C, avec une vitesse volumique horaire de 0,1-10h⁻¹ avantageusement 0,2-10h⁻¹, et de préférence 0,5-5h⁻¹, et un taux volumique hydrogène/hydrocarbures de 100 à 2000. L'effluent issu du réacteur d'hydroisomérisation est fractionné en différentes coupes pétrolières classiques telles que gaz, essences, distillats moyens et "résidu isomérisé"; la fraction appelée "résidu isomérisé" représente la fraction la plus lourde obtenue lors du fractionnement et c'est de celle-ci qu'est extraite la fraction huileuse. Traditionnellement, l'extraction de la fraction huileuse a lieu lors de l'opération appelée déparaffinage. Le choix des températures lors de l'étape de fractionnement des effluents issus du réacteur d'hydroisomérisation peut varier très fortement en fonction des besoins spécifiques du raffineur.

Dans le cas ou les teneurs en produits insaturés ou oxygénés sont suceptibles d'entrainer une désactivation trop importante du système catalytique, la charge issue du procédé Fiscehr-Tropsch devra, avant d'entrer dans la zone d'hydroisomérisation, subir un hydrotraitement dans une zone d'hydrotraitement. On fait réagir de l'hydrogène avec la charge au contact d'un catalyseur d'hydrotraitement dont le rôle est de réduire la teneur en molécules hydrocarbonées insaturées et oxygénées produits lors de la synthèse Fischer-Tropsch. L'effluent issu de cette zone d'hydrotraitement est ensuite traité dans la zone d' hydroisomérisation.

Le catalyseur d'hydrotraitement est un catalyseur non craquant qui comprend au moins une matrice de préférence à base d'alumine et au moins un métal ou composé de métal ayant une fonction hydro-déshydrogénante. Cette matrice peut également renfermer de la silice-alumine, de l'oxyde de bore, de la magnésie, de la zircone, de l'oxyde de titane, de l'argile ou une combinaison de ces oxydes. La fonction hydro-déshydrogénante peut de préférence être assurée par au moins un métal ou composé de métal du groupe VIII tels que le nickel et le cobalt notamment. On peut utiliser une combinaison d'au moins un métal ou composé de métal du groupe VI (notamment le molybdène ou le tungstène) et d'au moins un métal ou composé de métal du groupe VIII (notamment cobalt et le nickel) de la classification périodique des éléments. Le composant d'hydro-deshydrogénation peut également être un métal noble (platine, palladium préférés), par exemple à raison de 0,01-5% en poids par rapport au catalyseur fini. La concentration en métal du groupe VIII non noble, lorsque celui-ci est utilisé, est de 0,01-15% en poids par rapport au catalyseur fini.

Ce catalyseur pourra contenir avantageusement du phosphore; en effet, ce composé apporte deux avantages aux catalyseurs d'hydrotraitement : une facilité de préparation lors notamment de l'imprégnation des solutions de nickel et de molybdène, et une meilleure activité d'hydrogénation.

La concentration totale en métaux des groupes VI et VIII, exprimée en oxydes de métaux, est comprise entre 5 et 40% en poids et de préférence entre 7 et 30% en poids et le rapport pondéral exprimé en oxyde de métal (ou de métaux) du groupe VI sur métal (ou métaux) du groupe VIII est compris entre 1.25 et 20 et de préférence entre 2 et 10. La concentration en oxyde de phosphore P205 sera inférieure à 15% en poids et de préférence inférieure à 10% en poids.

On peut utiliser un catalyseur contenant du bore et du phosphore selon le brevet EP-297,949. La somme des quantités de bore et de phosphore, exprimées respectivement en poids de trioxyde de bore et pentoxyde de phosphore, par rapport au poids de support, est d'environ 5 à 15% et le rapport atomique bore sur phosphore est d'environ 1:1 à 2:1 et au moins 40% du volume poreux total du catalyseur fini est contenu dans des pores de diamètre moyen supérieur à 13 nanomètres. De façon préférée, la quantité de métal du groupe VI tel que le molybdène ou le tungstène, est telle que le rapport atomique phosphore sur métal du groupe VIB est d'environ 0,5:1 à 1,5:1; les quantités de métal du groupe VIB et de métal du groupe VIII, tel que le nickel ou le cobalt, sont telles que le rapport atomique métal du groupe VIII sur métal du groupe VIB est d'environ 0,3:1 à 0,7:1. Les quantités de métal du groupe VIB exprimées en poids de métal par rapport au poids de catalyseur fini est d'environ 2 à 30% et la quantité de métal du groupe VIII exprimée en poids de métal par rapport au poids de catalyseur fini est d'environ 0,01 à 15%.

Les catalyseurs NiMo sur alumine, NiMo sur alumine dopée avec du bore et du phosphore et NiMo sur silice alumine sont préférés. Avantageusement, on choisira de l'alumine éta ou gamma.

Dans la zone d'hydrotraitement, la pression partielle d'hydrogène est comprise entre 0,5 et 25 MPa, avantageusement 0,5-20MPa et de préférence entre 2 et 18 MPa et la température entre 250-400°C et de préférence entre 300-380°C. Dans ces conditions opératoires, la durée de cycle du système catalytique est au moins égale à un an et de préférence égale à 2 ans et la désactivation du catalyseur, c'est-à-dire l'augmentation de température que doit subir le système catalytique pour que la conversion soit constante, est inférieure à 5°C/mois et de préférence inférieure à 2.5°C/mois. Dans ces conditions, la teneur en molécules insaturées et oxygénées est réduite à moins de 0,5% et à environ 0,1% en général.

Les huiles obtenues grâce au procédé de l'invention présentent de très bonnes caractéristiques, du fait de leur caractère très paraffinique. Par exemple, l'indice de viscosité (VI) de l'huile obtenue après déparaffinage au solvant MEK/toluène de la coupe 380⁺, est égal ou supérieur à 130 et de préférence supérieur à 135 et le point d'écoulement inférieur ou égal à -12°C. Le rendement en huile par rapport au résidu dépend de la conversion globale de la charge. Dans le cas de la présente invention, ce rendement est compris entre 5 et 100% en poids et de préférence supérieur à 10% et encore plus avantageusement supérieur à 60%. Dans un mode de réalisation avantageux, au moins une partie de la fraction non huileuse, obtenue lors de l'étape de déparaffinage du résidu isomérisé, est recyclée sur la zone d'hydrotraitement et/ou sur la zone d'hydroisomérisation.

Les exemples présentés ci-après illustrent les caractéristiques de l'invention sans toutefois en limiter la portée.

### Exemple 1 : préparation du catalyseur d'hydroisomérisation conforme à l'invention

Le support est une silice-alumine utilisée sous forme d'extrudés. Elle contient 29,1% poids de silice SiO₂ et 70.9% poids d'alumine Al₂O₃. La silice-alumine, avant ajout du métal noble, présente une surface de 389m²/g et un diamètre moyen des pores de 6,6nm. Le volume poreux total du support est de 0,76 ml/g.

Le catalyseur correspondant est obtenu après imprégnation du métal noble sur le support. Le sel de platine Pt(NH₃)₄Cl₂ est dissous dans un volume de solution correspondant au volume poreux total à imprégner. Le pH de l'eau est de 6,31 et le pH de la solution ainsi obtenue est de 6,07. Le solide est ensuite calciné pendant 2 heures sous air sec à 520°C. La teneur en platine est de 0,60%poids. La dispersion du Pt est égale à 60% et sa répartition est uniforme dans le grain. Mesurés sur le catalyseur, le volume poreux est égal à 0,75 ml/g, la surface BET égale à 332m²/g et le diamètre moyen des pores de 6,5nm et le volume poreux correspondant au pores dont le diamètre est compris entre 3,5nm et 9,5nm est de 0,44ml/g soit 59% du volume poreux total.

La répartition poreuse de ce catalyseur est la suivante :

| | | |
|---|---|---|
| pores de diamètre | <6 nm volume poreux = | 0,16 ml/g soit 21% du total. |
| | 6-15 nm | 0,36 ml/g soit 48%. |
| | 15-60 nm | 0,06 ml/g soit 8%. |
| | >60 nm | 0,17 ml/g soit 23%. |

### Exemple 2 : Evaluation du catalyseur au cours d'un test effectué dans les conditions d'hydroisomérisation.

Le catalyseur dont la préparation est décrite dans l'exemple précédent est utilisé dans les conditions de l'hydroisomérisation sur une charge de paraffines issues de la synthèse Fischer-Tropsch. Afin de pouvoir directement utiliser le catalyseur d'hydroisomérisation, la charge a été préalablement hydrotraitée et la teneur en oxygène amenée en dessous de 0,1% poids. Ces principales caractéristiques sont les suivantes :

| | |
|---|---|
| point initial | 201°C |
| point 10% | 258°C |
| point 50% | 357°C |
| point 90% | 493°C |
| point final | 592°C |
| point d'écoulement | +67°C |
| densité (20/4) | 0.799 |

L'unité de test catalytique comprend un seul réacteur en lit fixe, à circulation ascendante de la charge ("up-flow"), dans lequel est introduit 80 ml de catalyseur. Le catalyseur est alors soumis à une atmosphère d'hydrogène pur à une pression de 7MPa afin d'assurer la réduction de l'oxyde de platine en platine métallique puis la charge est enfin injectée. La pression totale est de 7MPa, le débit d'hydrogène est de 1000 litres d'hydrogène gazeux par litre de charge injectée, la vitesse volumique horaire est de 1h⁻¹ et la température de réaction de 370°C.

Dans le tableau ci-après sont reportés les résultats de la charge telle quelle et de la charge ayant subi l'opération d'hydroisomérisation.

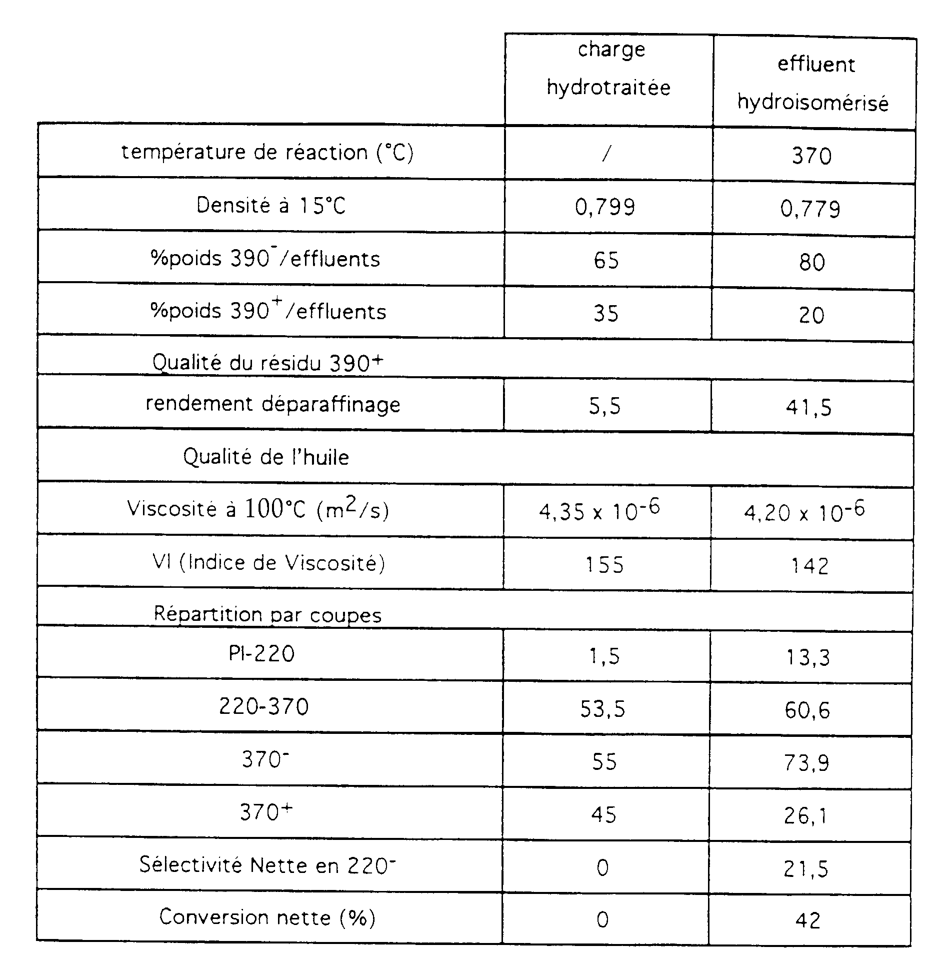

On note, de façon très claire, que la charge non hydroisomérisée présente un rendement enhuile extrêmement faible alors qu'après l'opération d'hydroisomérisation le rendement en huile est très satisfaisant et l'huile récupérée a un VI très élevé (VI=142) et un point d'écoulement égal à -21°C. De plus, le calcul montre que la sélectivité brute en naphta 220⁻ (défini comme correspondant aux produits dont la température de distillation est inférieure à 220°C) est faible puisqu'elle est égale à 18% poids pour une conversion brute en 370⁻ égale à 73,9% poids.

Exemple 2 bis : Le même catalyseur a été mis en contact de la même charge, dans les mêmes conditions excepté la température élevée à 375°C. Les résultats sont reportés dans le tableau ci-dessous :

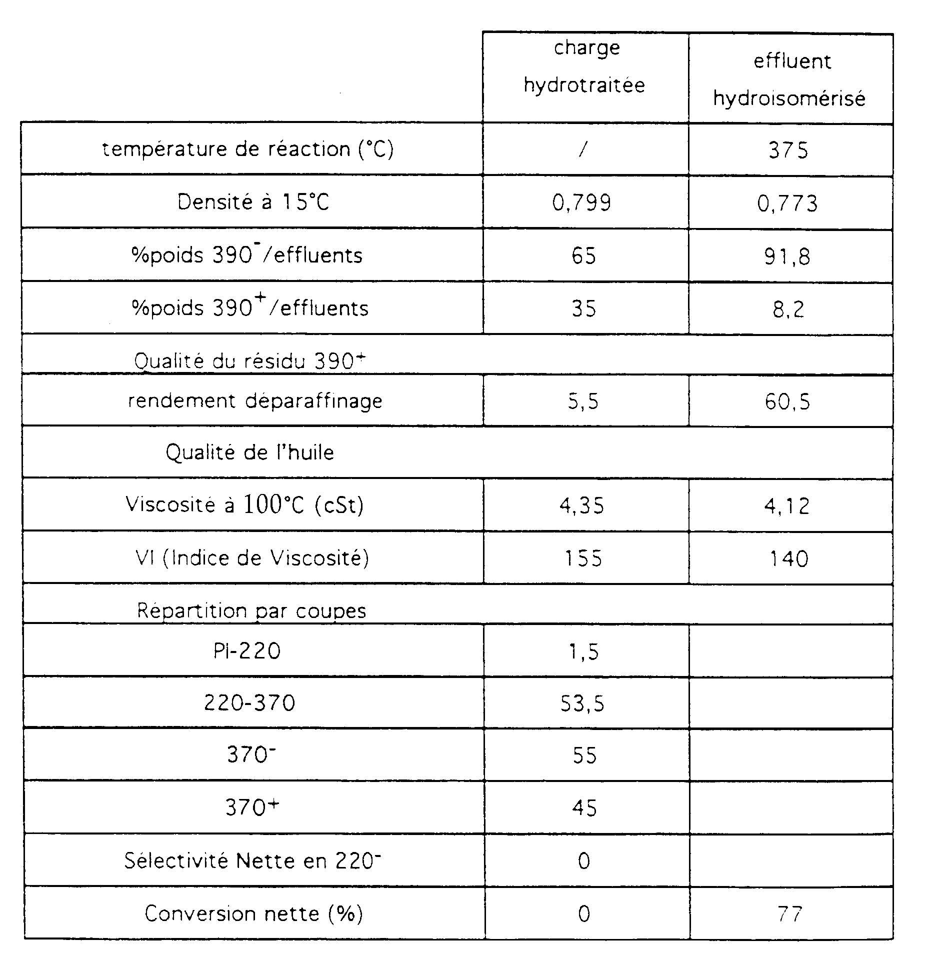

### Exemple 3 : evaluation du catalyseur de l'exemple 1, au cours de tests effectués sans recyclage ou avec recyclage de la fraction non huileuxe obtenue après déparaffinage.

Le catalyseur dont la préparation est décrite dans l'exemple 1 est utilisé dans les conditions de l'hydroisomérisation sur la charge de paraffines issues de la synthèse Fischer-Tropsch décrite précédemment

L'unité de test catalytique est identique à celle décrite dans l'exemple précédent. Dans un cas, la réaction est effectuée sans recyclage et dans l'autre cas avec recyclage de la fraction non huileuse obtenue obtenue après déparaffinage de la fraction résidu : cette fraction non huileuse obtenue après déparaffinage est couramment appelée "gateau de déparaffinage". Les conditions opératoires sont ajustées de façon à avoir les mêmes rendements en fraction résidu (c'est à dire de la fraction 390⁺).

Dans le tableau ci-après sont reportées les performances catalytiques obtenues avec ou sans recyclage du "gateau de déparaffinage".

| | sans recyclage | avec recyclage |
|---|---|---|
| %poids 390⁻/effluents | 80 | 74,6 |
| %poids 390⁺/effluents | 20 | 25,4 |
| rendement déparaffinage | 41,5 | 41,5 |
| %poids huile/charge | 8,3 | 12,4 |
| Conversion Nette en 390⁻ | 42,9 | 43,2 |

Dans tous les cas, les huiles obtenues ont un Indice de Viscosité (VI) supérieur à 140 et un point d'écoulement inférieur à -12°C. Il apparait que le rendement en poids huile/charge est très sensiblement amélioré par l'utilisation du recyclage.

## Revendications

1. Procédé de traitement de charges issues du procédé Fischer-Tropsch pour obtenir des huiles de base, caractérisé en ce que la charge est soumise à une hydroisomérisation dans une zone d'hydroisomérisation, l'effluent obtenu est fractionné pour obtenir un résidu isomérisé, ledit résidu étant soumis à un déparaffinage pour obtenir l'huile et une fraction non huileuse, et que la zone d'hydroisomérisation fonctionne à une température de 200-450°C, sous une pression de 2-25MPa, avec une vitesse volumique horaire de 0,1-10h⁻¹ et un taux volumique hydrogène/hydrocarbures de 100-2000, avec un catalyseur essentiellement constitué de 0,05-10% en poids d'au moins un métal noble du groupe VIII déposé sur un support amorphe de silice-alumine, le catalyseur ne contenant ni zéolite ni halogène, et montrant une teneur constante en silice dans tout le catalyseur, ledit support contenant 5-70% en poids de silice et présentant une surface spécifique BET de 100-500m^{2/}g et ledit catalyseur présentant un diamètre moyen de pores compris entre 1-12nm, le volume poreux des pores dont le diamètre est compris entre le diamètre moyen diminué de 3nm et le diamètre moyen augmenté de 3nm est supérieur à 40% du volume poreux total, la dispersion du métal noble étant comprise entre 20-100%, le coefficient de répartition du métal noble dans le catalyseur étant supérieur à 0,1.

2. Procédé selon la revendication 1, caractérisé en ce que la charge, avant d'être soumise à l'hydroisomérisation, subit un hydrotraitement dans une zone d'hydrotraitement sur un catalyseur comprenant de l'alumine et au moins un composant d'hydro-deshydrogénation, la température étant de 250-400°C et la pression 0,5-25MPa

3. Procédé selon l'une des revendications 1 ou 2, caractérisé en ce que au moins une partie de la fraction non huileuse obtenue au déparaffinage est recyclée sur la zone d'hydroisomérisation et/ou la zone d'hydrotraitement

4. Procédé selon l'une des revendications précédentes, caractérisé en ce que le métal noble du catalyseur d'hydroisomérisation est du platine.

5. Procédé selon l'une des revendications précédentes, caractérisé en ce que la teneur en silice du support du catalyseur d'hydroisomérisation est comprise entre 20 et 60% en poids.

6. Procédé selon l'une des revendications précédentes, caractérisé en ce que la teneur en silice du support est du catalyseur d'hydroisomérisation comprise entre 22 et 45% en poids.

7. Procédé selon l'une des revendications précédentes, caractérisé en ce que le volume poreux global du support du catalyseur d'hydroisomérisation est inférieur à 1,0ml/g.

8. Procédé selon l'une des revendications précédentes, caractérisé en ce que le support présente du catalyseur d'hydroisomérisation un volume poreux global d'au moins 0,3ml/g et inférieur à 0,9ml/g.

9. Procédé selon l'une des revendications précédentes, caractérisé en ce que le catalyseur d'hydroisomérisation présente un diamètre moyen des pores compris 2,5 et 11nm.

10. Procédé selon l'une des revendications précédentes, caractérisé en ce que le catalyseur présente un diamètre moyen des pores compris entre 4 et 10,5nm.

11. Procédé selon l'une des revendications précédentes, caractérisé en ce que le catalyseur d'hydroisomérisation présente un volume poreux des pores de diamètre compris entre le diamètre moyen diminué de 3 nm et le diamètre moyen augmenté de 3 nm compris entre 50 et 90% du volume poreux total.

12. Procédé selon l'une des revendications précédentes, caractérisé en ce que le catalyseur d'hydroisomérisation présente un volume poreux des pores de diamètre compris entre le diamètre moyen diminué de 3 nm et le diamètre moyen augmenté de 3 nm égal à 50-80% du volume poreux total.

13. Procédé selon l'une des revendications précédentes, caractérisé en ce que le catalyseur d'hydroisomérisation présente un volume poreux des pores de diamètre compris entre le diamètre moyen diminué de 3 nm et le diamètre moyen augmenté de 3 nm égal à 50-70% du volume poreux total.

14. Procédé selon l'une des revendications précédentes caractérisé en ce que le support du catalyseur d'hydroisomérisation présente une surface spécifique comprise entre 250 et 450m²/g

15. Procédé selon l'une des revendications précédentes caractérisé en ce que le support du catalyseur d'hydroisomérisation présente une surface spécifique comprise entre 310 et 450m²/g

16. Procédé selon l'une des revendications précédentes, caractérisé en ce que le support du catalyseur d'hydroisomérisation est imprégné par une solution neutre ou basique du sel de métal noble.

17. Procédé selon l'une des revencations précédentes, caractérisé en ce que la zone d'hydroisomérisation opère à une pression de 2-18MPa, une température de 300-450°C

18. Procédé selon l'une des revendications précédentes, caractérisé en ce que le procédé opère à une température de 320-450°C

19. Procédé selon la revendication 2 dans lequel le composant d'hydro-deshydrogénation est la combinaison d'au moins un métal ou composé de métal du groupe VIII et d'au moins un métal ou composé de métal du groupe VI de la classification périodique des éléments, la concentration totale en métaux des groupes VI et VIII, exprimée en oxydes de métaux est comprise entre 5 et 40% en poids et le rapport pondéral exprimé en oxyde(s) de métal (métaux) du groupe VI sur oxyde(s) de métal (métaux) du groupe VIII est compris entre 1,25 et 20.

20. Procédé selon la revendication 2 dans lequel le composant d'hydrodeshydrogénation est un métal noble choisi dans le groupe formé par le platine et le palladium.

21. Procédé selon l'une des revendications 2, 19 ou 20 dans lequel, pour le catalyseur d'hydrotraitement, la concentration en métal du groupe VIII, exprimée en poids par rapport au catalyseur fini, est comprise entre 0,01 et 5% dans le cas d'un métal noble et entre 0,01 et 15% en poids dans le cas d'un métal non noble.

22. Procédé selon l'une des revendications 2, 19, 20, 21 dans lequel le composant d'hydro-deshydrogénation comprend en outre du phosphore dont la teneur, exprimée en poids d'oxyde de phosphore P2O5 par rapport au catalyseur fini, est inférieure à 15%.

## Patentansprüche

1. Verfahren zur Behandlung von aus dem Fischer-Tropsch-Verfahren stammenden Chargen zum Erhalt der Basisöle, dadurch gekennzeichnet, daß die Charge einer Hydroisomerierung in einer Hydroisomerierungszone ausgesetzt wird, der erhaltene Abstrom fraktioniert wird, um einen isomerierten Rest zu erhalten, wobei der Rest einer Deparaffinierung ausgesetzt wird, um Öl und eine nichtölige Fraktion zu erhalten und die Hyrdoisomerierungszone bei einer Temperatur von 200-450°C unter einem Druck von 2-25 MPa bei einer stündlichen Volumengeschwindigkeit von 0,1-10 h⁻¹ und einem Volumenverhältnis Wasserstoff/Kohlenwasserstoffe von 100-2000 mit einem Katalysator arbeitet, der im wesentlichen besteht aus 0,05-10 Gew.% wenigstens eines Edelmetalls der Gruppe VIII, abgeschieden auf einem amorphen Träger von Silizium(di)-oxid-Aluminiumoxid und der Katalysator weder Zeolith noch Halogen enthält und einen konstanten Gehalt an Silizium(di)oxid im gesamten Katalysator zeitigt, wobei dieser Träger 5-70 Gew.% Silizium(di)oxid enthält und eine spezifische Oberfläche BET von 100-500 m²/g aufweist und dieser Katalysator einen mittleren Porendurchmesser zwischen 1-12 nm aufweist, das Porenvolumen der Poren, deren Durchmesser zwischen dem mittleren Durchmesser, vermindert um 3 nm, und dem mittleren Durchmesser um 3 nm erhöht liegt, um 40 % höher als das Porengesamtvolumen ist, wobei die Dispersion des Edelmetalls zwischen 10-100 % liegt und der Verteilungskoeffizient des Edelmetalls im Katalysator über 0,1 beträgt.

2. Verfahren nach Anspruch 1, dadurch gekennzeichnet, daß die Charge, bevor sie der Hydroisomierung ausgesetzt wird, ein Hydrotreatment in einer Hydrotreatmentzone auf einem Katalysator erfährt, der Aluminiumoxid und wenigstens eine Hydro-Dehydrierungskomponente umfaßt, wobei die Temperatur zwischen 250-400°C und der Druck bei 0,5-25 MPa liegt.

3. Verfahren nach einem der Ansprüche 1 oder 2, dadurch gekennzeichnet, daß wenigstens ein Teil der nichtöligen beim Deparaffinieren erhaltenen Fraktion auf die Hydroisomierungszone und/oder die Hydrotreatmentzone rezykliert wird.

4. Verfahren nach einem der vorhergehenden Ansprüche, dadurch gekennzeichnet, daß das Edelmetall des Hydroisomerierungskatalysators Platin ist.

5. Verfahren nach einem der vorhergehenden Ansprüche, dadurch gekennzeichnet, daß der Gehalt des Trägers des Hydroisomerierungskatalysators an Silizium(di)oxid zwischen 20 und 60 Gew.% beträgt.

6. Verfahren nach einem der vorhergehenden Ansprüche, dadurch gekennzeichnet, daß der Gehalt des Trägers an Silizium(di)-oxid des Hydroisomerierungskatalysators zwischen 22 und 45 Gew.% liegt.

7. Verfahren nach einem der vorhergehenden Ansprüche, dadurch gekennzeichnet, daß das Porengesamtvolumen des Trägers des Hydroisomerierungskatalysators niedriger als 1,0 ml/g liegt.

8. Verfahren nach einem der vorhergehenden Ansprüche, dadurch gekennzeichnet, daß der Träger des Hydroisomerierungskatalysators ein Porengesamtvolumen von wenigstens 0,3 ml/g und weniger als 0,9 ml/g aufweist.

9. Verfahren nach einem der vorhergehenden Ansprüche, dadurch gekennzeichnet, daß der Hydroisomerierungskatalysator einen mittleren Durchmesser der Poren zwischen 2,5 und 11 nm zeigt.

10. Verfahren nach einem der vorhergehenden Ansprüche, dadurch gekennzeichnet, daß der Katalysator einen mittleren Durchmesser der Poren zwischen 4 und 10,5 nm zeigt.

11. Verfahren nach einem der vorhergehenden Ansprüche, dadurch gekennzeichnet, daß der Hydroisomerierungskatalysator ein Porenvolumen der Poren von einem Durchmesser zwischen dem mittleren Durchmesser, vermindert um 3 nm und dem mittleren Durchmesser, erhöht um 3 nm zwischen 50 und 90 % des Porengesamtvolumens aufweist.

12. Verfahren nach einem der vorhergehenden Ansprüche, dadurch gekennzeichnet, daß der Hydroisomerierungskatalysator ein Porenvolumen der Poren von einem Durchmesser zwischen dem mittleren Durchmesser, vermindert um 3 nm und dem mittleren Durchmesser, erhöht um 3 nm gleich 50-80 % des Porengesamtvolumens aufweist.

13. Verfahren nach einem der vorhergehenden Ansprüche, dadurch gekennzeichnet, daß der Hydroisomerierungskatalysator ein Porenvolumen der Poren von einem Durchmesser zwischen dem mittleren Durchmesser, vermindert um 3 nm und dem mittleren Durchmesser, erhöht um 3 nm gleich 50-70 % des Porengesamtvolumens aufweist.

14. Verfahren nach einem der vorhergehenden Ansprüche, dadurch gekennzeichnet, daß der Träger des Hydroisomerierungskatalysators eine spezifische Oberfläche zwischen 250 und 450 m²/g aufweist.

15. Verfahren nach einem der vorhergehenden Ansprüche, dadurch gekennzeichnet, daß der Träger des Hydroisomerierungskatalysators eine spezifische Oberfläche zwischen 310 und 450 m²/g aufweist.

16. Verfahren nach einem der vorhergehenden Ansprüche, dadurch gekennzeichnet, daß der Träger des Hydroisomerierungskatalysators mit einer neutralen Lösung oder basischen Lösung des Edelmetallsalzes imprägniert ist.

17. Verfahren nach einem der vorhergehenden Ansprüche, dadurch gekennzeichnet, daß die Isomerierungszone bei einem Druck zwischen 2-18 MPa und einer Temperatur von 300-450°C arbeitet.

18. Verfahren nach einem der vorhergehenden Ansprüche, dadurch gekennzeichnet, daß das Verfahren bei einer Temperatur von 320-450°C betrieben wird.

19. Verfahren nach Anspruch 2, bei dem die Hydro-Dehydrierungskomponente die Kombination wenigstens eines Metalls oder einer Metallverbindung der Gruppe VIII und wenigstens eines Metalls oder einer Metallverbindung der Gruppe VI des Periodensystems der Elemente ist, die Gesamtkonzentration an Metallen der Gruppe VI und VIII ausgedrückt als Oxide der Metalle zwischen 5 und 40 Gew.% und das Gewichtsverhältnis, ausgedrückt in Metalloxid(en) der Gruppe VI auf Metalloxid(en) der Gruppe VIII zwischen 1,25 und 20 liegt.

20. Verfahren nach Anspruch 2, bei dem die Hydro-Dehydrierungskomponente ein Edelmetall ist, das aus der durch Platin und Palladium gebildeten Gruppe gewählt ist.

21. Verfahren nach einem der Ansprüche 2, 19 oder 20, bei dem für den Hydrotreatmentkatalysator die Konzentration an Metall der Gruppe VIII, ausgedrückt in Gewicht bezogen auf den fertigen Katalysator zwischen 0,01 und 5 % für den Fall eines Edelmetalls und zwischen 0,01 und 15 Gew.% im Falle eines Nichtedelmetalls liegt.

22. Verfahren nach einem der Ansprüche 2, 19, 20, 21, bei dem die Hydro-Dehydrierungskomponente im übrigen Phosphor umfaßt, dessen Gehalt, ausgedrückt in Gewicht Phosphoroxid P₂O₅ bezogen auf den fertigen Katalysator kleiner als 15 % beträgt.

## Claims

1. A process for the treatment of feeds from a Fischer-Tropsch process to obtain lubricating oils, characterised in that the feed is hydroisomerised in a hydroisomerisation zone, the effluent obtained is fractionated to obtain an isomerised residue, said residue being dewaxed to obtain oil and a non oily fraction , and in that the hydroisomerisation zone is operated at a temperature of 200-450°C, at a pressure of 2-25 MPa, with an hourly space velocity of 0.1-10 h⁻¹ and a hydrogen/hydrocarbon volume ratio of 100-2000, using a catalyst which essentially consists of 0.05-10% by weight of at least one precious metal from group VIII deposited on an amorphous silica-alumina support, the catalyst containing neither zeolite nor halogen, and having a constant silica content in the whole catalyst, said support containing 5-70% by weight of silica and having a BET specific surface area of 100-500 m²/g, and said catalyst having an average pore diameter of 1-12 nm, the pore volume of pores with diameters between the average diameter reduced by 3 nm and the average diameter increased by 3 nm being greater than 40% of the total pore volume, the dispersion of the precious metal being between 20-100%, and the distribution coefficient of the precious metal in the catalyst being greater than 0.1.

2. A process according to claim 1, characterised in that the feed, before hydroisomerisation, is hydrotreated in a hydrotreatment zone using a catalyst comprising alumina and at least one hydro-dehydrogenation component, the temperature being 250-400°C and the pressure being 0.5-25 MPa.

3. A process according to claim 1 or claim 2, characterised in that at least a portion of the non oily fraction obtained from the dewaxing step is recycled to the hydroisomerisation zone and/or to the hydrotreatment zone.

4. A process according to any one of the preceding claims, characterised in that the precious metal in the hydroisomerisation catalyst is platinum.

5. A process according to any one of the preceding claims, characterised in that the silica content in the support of the hydroisomerisation catalyst is between 20% and 60% by weight.

6. A process according to any one of the preceding claims, characterised in that the silica content in the support of the hydroisomerisation catalyst is between 22% and 45% by weight.

7. A process according to any one of the preceding claims, characterised in that the total pore volume in the support for the hydroisomerisation catalyst is less than 1.0 ml/g.

8. A process according to any one of the preceding claims, characterised in that the hydroisomerisation catalyst has a total pore volume of at least 0.3 ml/g and less than 0.9 ml/g.

9. A process according to any one of the preceding claims, characterised in that the hydroisomerisation catalyst has an average pore diameter of between 2.5 and 11 nm.

10. A process according to any one of the preceding claims, characterised in that the average pore diameter is between 4 and 10.5 nm.

11. A process according to any one of the preceding claims, characterised in that the hydroisomerisation catalyst has a pore volume of pores with diameters between the average diameter reduced by 3 nm and the average diameter increased by 3 nm of between 50% and 90% of the total pore volume.

12. A process according to any one of the preceding claims, characterised in that the hydroisomerisation catalyst has a pore volume of pores with diameters between the average diameter reduced by 3 nm and the average diameter increased by 3 nm of 50%-80% of the total pore volume.

13. A process according to any one of the preceding claims, characterised in that the hydroisomerisation catalyst has a pore volume of pores with diameters between the average diameter reduced by 3 nm and the average diameter increased by 3 nm of 50%-70% of the total pore volume.

14. A process according to any one of the preceding claims, characterised in that the support for the hydroisomerisation catalyst has a specific surface area of between 250 and 450 m²/g.

15. A process according to any one of the preceding claims, characterised in that the support for the hydroisomerisation catalyst has a specific surface area of between 310 and 450 m²/g.

16. A process according to any one of the preceding claims, characterised in that the support for the hydroisomerisation catalyst is impregnated with a neutral or basic solution of a precious metal salt.

17. A process according to any one of the preceding claims, characterised in that the hydroisomerisation zone is operated at a pressure of 2-18 MPa, and a temperature of 300-450°C.

18. A process according to any one of the preceding claims, characterised in that the process is operated at a temperature of 320-450°C.

19. A process according to claim 2, in which the hydrodehydrogenation component is a combination of at least one metal or metal compound from group VIII and at least one metal or metal compound from group VI of the periodic classification of the elements, the total concentration of metals from groups VI and VIII, expressed as the metal oxides, being between 5% and 40% by weight and the ratio of group VI metal oxides to group VIII metal oxides being between 1.25 and 20 by weight.

20. A process according to claim 2, in which the hydro-dehydrogenation component is a precious metal selected from the group formed by platinum and palladium.

21. A process according to any one of claims 2, 19 or 20, in which, for the hydrotreatment catalyst, the concentration of group VIII metal, expressed as the weight with respect to the finished catalyst, is between 0.01% and 5% in the case of a precious metal and between 0.01% and 15% in the case of a non precious metal.

22. A process according to any one of claims 2, 19, 20 or 21, in which the hydro-dehydrogenation component further comprises phosphorous in an amount, expressed as the weight of phosphorous oxide P₂O₅, of less than 15% with respect to the finished catalyst.
